# EUROPÄISCHE PATENTSCHRIFT

(11) **EP 1 178 895 B1**
(45) Veröffentlichungstag und Bekanntmachung des Hinweises auf die Patenterteilung: **21.07.2004**
(21) Anmeldenummer: 00931191.1
(22) Anmeldetag: 10.05.2000
(51) Int. Cl.: B60K 17/356, F16H 39/02

(54) **HYDROSTATISCHER FAHRANTRIEB**
HYDROSTATIC TRAVELLING MECHANISM
SYSTEME D'ENTRAINEMENT HYDROSTATIQUE

(30) Priorität: 21.05.1999 DE 19923516
(43) Veröffentlichungstag der Anmeldung: 13.02.2002
(60) Teilanmeldung: 03006245.9
(73) Patentinhaber: Bosch Rexroth AG, 97816 Lohr am Main (DE)
(72) Erfinder: PEKKANEN, Jukka, FIN-33720 Tampere (FI); RINCK, Stefan, D-89264 Weissenhorn (DE); BRAND, Michael, D-89075 Ulm (DE)
(74) Vertreter: Körfer, Thomas, Dipl.-Phys.
(86) Internationale Anmeldenummer: PCT/EP2000/004263
(87) Internationale Veröffentlichungsnummer: WO 2000/071379

(56) Entgegenhaltungen:
- EP-A- 0 752 545
- EP-A- 0 916 541
- FR-A- 2 741 130
- PATENT ABSTRACTS OF JAPAN vol. 1996, no. 11, 29. November 1996 (1996-11-29) & JP 08 177010 A (KOMATSU ESUTO:KK;KOMATSU LTD), 9. Juli 1996 (1996-07-09)

## Beschreibung

Die Erfindung betrifft einen hydrostatischen Fahrantrieb zum Antrieb eines Fahrzeugs, insbesondere eines forstwirtschaftlichen Nutzfahrzeuges, nach dem Oberbegriff des Anspruchs 1.

Aus der DE 195 24 189 C2 ist ein hydrostatischer Fahrantrieb bekannt, bei dem mittels eines Verbrennungsmotors eine Hydropumpe angetrieben wird, die mit einem Hydromotor in einem geschlossenen Hydraulikkreislauf angeordnet ist. Sowohl die Hydropumpe als auch der Hydromotor sind über eine elektrisch angesteuerte Verstelleinrichtung in Abhängigkeit von durch eine elektrische Steuereinheit erzeugten elektrischen Steuersignalen verstellbar. Der Hydromotor treibt über ein Schaltgetriebe und ein Differentialgetriebe die Fahrzeugräder einer Fahrzeugachse an. Bei diesem hydrostatischen Fahrantrieb ist nachteilig, daß der Antrieb ausschließlich über einen geschlossenen Hydraulikkreislauf erfolgt. Die Anbindung des Hydromotors an die Hydropumpe ist relativ starr, so daß es bei einem Lastwechsel, insbesondere in unebenem und unwegsamen Gelände, häufig zum Durchrutschen der Antriebsräder kommt. Das mechanische Differentialgetriebe hat den Nachteil, daß im unwegsamen Gelände eine Differentialsperre erforderlich ist. Wenn das Differentialgetriebe gesperrt ist, tritt bei Kurvenfahrten jedoch zwangsläufig ein Schlupf an den Antriebsrädern auf, so daß es zu einer, insbesondere beim forstwirtschaftlichen Einsatz, möglichst zu vermeidenden Schädigung des Untergrunds kommt.

Mobile Arbeitsgeräte, die im unwegsamen Gelände eingesetzt werden, insbesondere forstwirtschaftliche Arbeitsgeräte, werden häufig mit zwei oder mehr angetriebenen Fahrzeugachsen ausgestattet, wobei ein Fahrzeuggelenk einen Winkelversatz zwischen den angetriebenen Fahrzeug erlaubt, um dem mobilen Arbeitsgerät die notwendige Geländegängigkeit zu ermöglichen. Dabei stellt sich die Problematik des Antriebs der Fahrzeugachsen in besonderem Maße. Eine bekannte Lösung besteht darin, die Fahrzeugachsen über eine Kardanwelle zu verbinden. Dies fordert jedoch einen relativ hohen konstruktiven Aufwand. Die starre Kopplung der Fahrzeugachsen hat den Nachteil eines erhöhten Bodenabtrags. Durch die Kardanwelle ist zudem der maximale Winkelversatz der angetriebenen Fahrzeugachsen begrenzt.

Ferner ist es bekannt, die angetriebenen Fahrzeugachsen durch getrennte Hydromotoren anzutreiben, die mit einer gemeinsamen Hydropumpe durch einen geschlossenen Hydraulikkreislauf verbunden sind. Durch die feste hydraulische Kopplung besteht auch hier der Nachteil eines unerwünscht hohen Bodenabtrags. Bei mobilen Arbeitsgeräten, bei welchen die Hauptfunktion im hydraulischen Betrieb von Arbeitswerkzeugen besteht und dem hydrostatischen Antrieb lediglich eine Hilfsfunktion zukommt, ist es bekannt, den hydrostatischen Antrieb ausschließlich in einem offenen Hydraulikkreislauf zu betreiben. Nachteilig ist hierbei jedoch der geringe Wirkungsgrad und das geringe erzeugbare Drehmoment.

Ein hydrostatischer Fahrantrieb der eingangs angegebenen Art ist in der JP 08 177010 A beschrieben. Dieser vorbekannte hydrostatische Fahrantrieb weist eine erste Hydropumpe in einem geschlossenen Hydraulikkreis und eine zweite Hydropumpe in einem offenen Hydraulikkreis auf, wobei der erste Hydromotor die Fahrzeugräder zumindest einer ersten Fahrzeugachse antreibt und an einem Steuerventil neben dem zweiten Hydromotor ein dritter Hydromotor angeschlossen ist, und wobei der zweite Hydromotor und der dritte Hydromotor gegenüberliegende Fahrzeugräder einer zweiten Fahrzeugachse antreiben.

Hierdurch wird sowohl ein hoher Wirkungsgrad und ein hohes Drehmoment als auch eine geringe Schädigung des Untergrunds erzielt.

Der Erfindung liegt die Aufgabe zugrunde, einen hydrostatischen Fahrantrieb anzugeben, bei dem der Bodenabtrag weiter vermindert ist.

Die Aufgabe wird durch die kennzeichnenden Merkmale des Anspruchs 1 in Verbindung mit den gattungsbildenden Merkmalen gelöst.

Die Unteransprüche betreffen vorteilhafte Weiterbildungen der Erfindung.

Beim erfindungsgemäßen hydrostatischen Fahrantrieb sind die Vorzüge eines Antriebs über einen offenen Hydraulikkreislauf mit den Vorzügen eines Antriebs über einen geschlossenen Hydraulikkreislauf miteinander verbunden. Es sind deshalb zwei Antriebsstränge vorgesehen. In einem ersten Antriebsstrang arbeitet eine erste Hydropumpe mit einem ersten Hydromotor in einem geschlossenen Hydraulikkreislauf zusammen, während in einem zweiten Arbeitsstrang eine zweite Hydropumpe mit einem zweiten Hydromotor in einem offenen Hydraulikkreislauf zusammenarbeitet. Die beiden Hydromotoren treiben dabei unterschiedliche Fahrzeugräder, oder unterschiedliche Fahrzeugachsen, an. Mit dem Antriebsstrang mit geschlossenem Hydraulikkreislauf kann ein relativ hohes Drehmoment erzielt werden. In dem Antriebsstrang mit dem offenen Hydraulikkreislauf ist der Hydromotor relativ lose an die Hydropumpe angekoppelt, so daß sich die Drehzahl der von diesem Antriebsstrang angetriebenen Fahrzeugräder dynamisch an die durch die Bodenbeschaffenheit und Bodenhindernisse vorgegebenen Verhältnisse anpassen kann. Dadurch wird dem Umstand Rechnung getragen, daß die Drehzahl der beiden unterschiedlich angetriebenen Fahrzeugachsen beispielsweise dann in erheblichem Maße voneinander abweicht, wenn eine der beiden Fahrzeugachsen ein Hindernis überwindet. Werden die beiden Fahrzeugachsen, wie beim Stand der Technik, hydraulisch oder mechanisch starr miteinander gekoppelt, würde dies an einer der beiden Fahrzeugachsen zu einem Schlupf führen, welcher unvermeidlich eine Schädigung des Untergrunds verursacht. Durch die erfindungsgemäße relativ lose Ankopplung des Hydromotors an die Hydropumpe in einem der beiden Antriebsstränge, werden die beschriebenen Drehzahlunterschiede kurzzeitig in dem offenen Hydraulikkreislauf ausgeglichen. Da eine der Fahrzeugachsen jedoch über einen geschlossenen Hydraulikkreislauf angetrieben ist, läßt sich dennoch ein hohes Drehmoment erzeugen.

Beim erfindungsgemäßen hydrostatischen Fahrantrieb ist außerdem in der Vorlaufleitung des offenen Hydraulikkreislaufes ein Steuerventil angeordnet. Mit dem Steuerventil des offenen Hydraulikkreislaufes sind zwei Hydromotoren verbunden, die gegenüberliegende Fahrzeugräder einer Fahrzeugachse antreiben. Durch das Steuerventil können diesen Hydromotoren dann individuelle Volumenströme zugemessen werden, so daß sich bei geeigneter Ansteuerung des Steuerventils eine Differentialwirkung erreichen läßt. Gleichzeitig läßt sich das Fahrzeug über das unterschiedliche Zumessen der Volumenströme dieser beiden Hydromotoren auch lenken.

Wenn die Fahrzeugachsen, wie bei forstwirtschaftlichen Nutzfahrzeugen üblich, nicht starr zueinander ausgerichtet sind, sondern in der Fahrzeugkarosserie ein Gelenk vorgesehen ist, welches einen Knickwinkel zwischen den Fahrzeugachsen erlaubt, so läßt sich dieser Knickwinkel durch unterschiedlichen Antrieb der mit dem Steuerventil verbundenen Hydromotoren gezielt vergrößern oder verringern.

Ferner können in dem Antriebsstrang mit offenem Hydraulikkreislauf die dort vorgesehenen Hydromotoren bei einem Schnelllaufbetrieb, beispielsweise auf einer Forststraße, abgeschaltet werden, so daß der Antrieb nur noch über den geschlossenen Hydraulikkreislauf erfolgt. Dies hat den Vorteil, daß die im offenen Kreislauf betriebenen Hydromotoren nicht mit hoher Drehzahl mitlaufen müssen.

Der offene Hydraulikkreislauf kann ferner gleichzeitig zum Antrieb weiterer hydraulischer Komponenten, z. B. einer Säge, eines Krans usw., dienen, ohne daß zum Antrieb dieser weiteren hydraulischen Komponenten eine zusätzliche Hydropumpe erforderlich wäre.

Die Erfindung wird nachfolgend unter Bezugnahme auf die Zeichnung näher beschrieben. In der Zeichnung zeigen:
- Fig. 1: ein hydraulisches Prinzipschaltbild eines ersten Ausführungsbeispiels der Erfindung;
- Fig. 2: ein elektronisches Prinzipschaltbild des ersten Ausführungsbeispiels der Erfindung;
- Fig. 3A: einen ersten Teil eines hydraulischen Schaltbilds eines zweiten Ausführungsbeispiels der Erfindung; und
- Fig. 3B: den zweiten Teil des hydraulischen Schaltbilds des zweiten Ausführungsbeispiels der Erfindung.

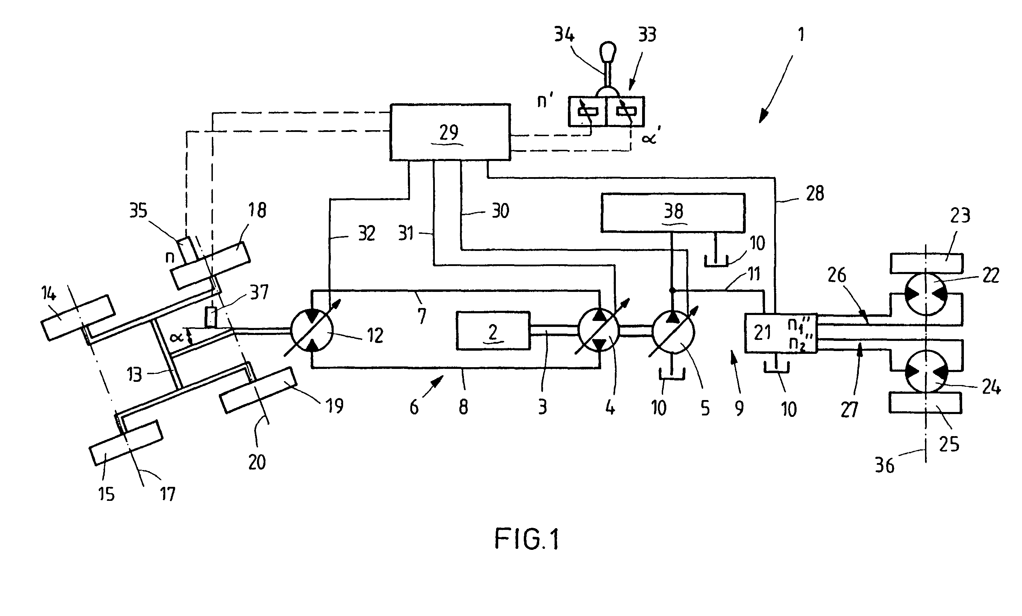

Fig. 1 zeigt die zum Verständnis der Erfindung notwendigen Komponenten des hydrostatischen Fahrantriebs 1 in einem hydraulischen Prinzipschaltbild.

Von einem Verbrennungsmotor 2, beispielsweise einem Dieselmotor, werden über eine gemeinsame Antriebswelle 3 eine erste Hydropumpe 4 und eine zweite Hydropumpe 5 angetrieben. Die Hydropumpen 4 und 5 können beispielsweise als kompakte Doppelpumpe ausgebildet sein. Der hydrostatische Fahrantrieb 1 verfügt erfindungsgemäß sowohl über einen geschlossenen Hydraulikkreislauf 6 mit einer Vorlaufleitung 7 und einer Rücklaufleitung 8 als auch über einen offenen Hydraulikkreislauf 9. In dem offenen Hydraulikkreislauf 9 saugt die Hydropumpe 5 das Hydraulikfluid aus einem Hydraulikfluid-Tank 10 an und speist es in eine Zulaufleitung 11 ein. Mit der Zulaufleitung 11 sind verschiedene hydraulische Verbraucher verbunden, die das Hydraulikfluid in den Hydraulikfluid-Tank 10 zurückfließen lassen.

In dem geschlossenen Hydraulikkreislauf 6 befindet sich zwischen der Vorlaufleitung 7 und der Rücklaufleitung 8 ein erster Hydromotor 12, der über einen mechanischen Antriebsstrang 13 die Fahrzeugräder 14 und 15 einer ersten Fahrzeugachse 17 und die Fahrzeugräder 18 und 19 einer dritten Fahrzeugachse 20 antreibt. In dem geschlossenen Hydraulikkreislauf ist die Funktion der Vorlauf- und Rücklaufleitung bei einer Umkehr der Drehrichtung des Hydromotors 12 vertauscht. Die Fahrzeugräder 14 bis 19 bilden im Ausführungsbeispiel die Vorderräder des anzutreibenden Fahrzeugs, beispielsweise eines forstwirtschaftlichen Nutzfahrzeugs.

In dem offenen Hydraulikkreislauf 9 befindet sich ein Steuerventil 21 zwischen der Zulaufleitung 11 und dem Hydraulikfluid-Tank 10. Mit dem Steuerventil 21 sind ein zweiter Hydromotor 22, welcher ein Fahrzeugrad 23 antreibt, und ein dritter Hydromotor 24, welcher ein Fahrzeugrad 25 antreibt, über hydraulische Kreisläufe 26 und 27 verbunden. Die hydraulischen Kreisläufe 26 und 27 sind im Ausführungsbeispiel als offene Hydraulikkreisläufe ausgebildet.

Das Steuerventil 21 ist über eine elektrische Steuerleitung 28 mit einer Fahrantriebssteuerung 29 verbunden, die über weitere elektrische Steuerleitungen 30, 31 und 32 mit Verstellvorrichtungen der Hydropumpen 4 und 5 und einer Verstellvorrichtung des Hydromotors 12 verbunden ist. Über einen Steuergeber 33 wird die Fahrantriebssteuerung 29 durch die Bedienperson angesteuert.

Die Fahrantriebssteuerung 29 kann als Folgeregelung arbeiten, wobei der Antrieb der Hinterräder 23 und 25 in Abhängigkeit von dem Antrieb der Vorderräder 14, 15, 18 und 19 erfolgt. Über den Hebel 34, beispielsweise einen Joystick, wird die von der Bedienperson gewünschte Fahrgeschwindigkeit des Fahrzeugs bzw. die dieser Fahrzeuggeschwindigkeit entsprechende Solldrehzahl n' vorgegeben. In der elektronischen Fahrantriebssteuerung 29 wird diese Solldrehzahl n' mit der Istdrehzahl n verglichen, die über einen Sensor 35 beispielsweise an der dritten Fahrzeugachse 20 ermittelt wird. Durch eine entsprechende Ansteuerung der Verstellvorrichtungen der Hydropumpe 4 und des Hydromotors 12 in dem geschlossenen Hydraulikkreislauf 6 wird die Istdrehzahl n an die Solldrehzahl n' angeglichen. Da die Ankopplung des Hydromotors 12 an die Hydropumpe 4 in dem geschlossenen Hydraulikkreislauf 6 relativ starr ist, kann in diesem Antriebsstrang ein relativ hohes Drehmoment auf die Fahrzeugräder 14, 15, 18 und 20 übertragen werden.

Das Steuerventil 21 in dem offenen Hydraulikkreislauf 9 wird durch die Fahrantriebssteuerung 29 so angesteuert, daß den Hydromotoren 22 und 24 ein solcher Volumenstrom zugemessen wird, daß die Antriebsräder 23 und 25 sich im wesentlichen schlupffrei drehen. Die von dem Steuerventil 21 separat für den zweiten Hydromotor 22 und den dritten Hydromotor 24 vorgegebenen Volumenströme entsprechen den Drehzahlen n1" bzw. n2" an den Fahrzeugrädern 23 bzw. 25. Wenn auf der Fahrstrecke ein Hindernis, beispielsweise ein Baumstamm, auftritt und deshalb beim Überwinden des Hindernisses kurzzeitig die von der Fahrantriebssteuerung ermittelten Drehzahlen n einerseits und n1" und n2" andererseits nicht mit den errechneten Werten übereinstimmen, so wird solch ein kurzzeitiger Drehzahlunterschied durch den erfindungsgemäßen hydrostatischen Fahrantrieb ausgeglichen, da die Hydromotoren 22 und 24 des offenen Hydraulikkreislaufes 9 mit der Hydropumpe 5 relativ lose gekoppelt sind. Ein hoher Schlupf, der zur Schädigung des Untergrundes führen würde, tritt nicht auf.

Bei Kurvenfahrten kann den beiden Hydromotoren 22 und 24 durch geeignetes Ansteuern des Steuerventils 21 durch die Fahrantriebssteuerung 29 ein derart unterschiedlicher Volumenstrom zugemessen werden, daß ein Differentialausgleich an der zweiten Fahrzeugachse 36 berücksichtigt wird. Ein Differentialgetriebe und eine Differentialsperre sind nicht erforderlich. Eine gegebenenfalls vorhandene Differentialsperre an der ersten und dritten Fahrzeugachse 17 und 20 muß im Regelfall nicht betätigt werden, da die Fahrzeugräder 23 und 25 der zweiten Fahrzeugachse 36 ständig zueinander gesperrt sind. Dies vermindert die Bodenschädigung.

Die Fahrzeugachsen 17 und 20 der Vorderräder 14, 15 18 und 19 können gegenüber der Fahrzeugachse 36 der Hinterräder 23 und 25 um einen Schwenkwinkel α geschwenkt werden, um eine höhere Geländegängigkeit des Fahrzeugs zu erreichen. Dazu ist an der nicht dargestellten Karosserie des Fahrzeugs ein entsprechendes Gelenk vorgesehen. Der Istknickwinkel α, den die Fahrzeugachsen 17 und 20 gegenüber der Fahrzeugachse 36 bilden, kann mit einem Sensor 37 erfaßt werden und von der Fahrantriebssteuerung 29 ausgewertet werden. Durch die mit dem Hebel 34 des Steuergebers 33 beeinflußbare Kurvensteuerung des Fahrzeugs wird ein Sollknickwinkel α' festgelegt, der der Fahrantriebssteuerung 29 ebenfalls zugeführt wird. Dem Steuerventil 21 wird über die Steuerleitung 28 dann ein Steuersignal so zugeführt, daß bei der Zumessung der Volumenströme für die beiden Hydromotoren 22 und 24 der Knickwinkel α und der sich daraus ergebende Kurvenradius berücksichtigt wird. Zur Anpassung des Istknickwinkels α an den Sollknickwinkel α' kann über das Steuerventil 21 an den Hydromotoren 22 und 24 eine zusätzliche Drehzahldifferenz erzeugt werden, so daß durch das Steuerventil 21 eine Lenkung des Fahrzeugs möglich wird.

Der offene Hydraulikkreislauf 9 kann gleichzeitig zum Antrieb weiterer hydraulischer Komponenten, beispielsweise eines Krans, einer Säge oder eines Harvester-Kopfes dienen. Diese weiteren hydraulischen Komponenten sind in Fig. 1 mit dem Bezugszeichen 38 schematisch angedeutet. Vorteilhaft ist eine weitere Hydropumpe zum Antrieb dieser weiteren hydraulischen Komponenten 38 nicht erforderlich, sondern die zweite Hydropumpe 5 dient sowohl für den hydrostatischen Teilantrieb mittels des offenen Hydraulikkreislaufes 9 als auch zum Antrieb dieser zusätzlichen hydraulischen Komponenten 38.

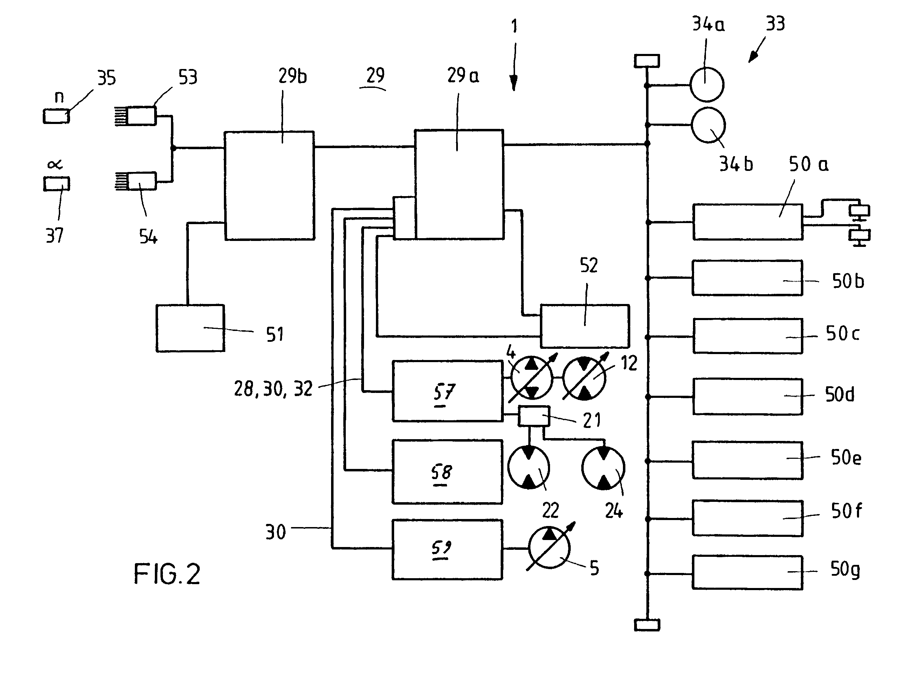

Fig. 2 zeigt ein elektronisches Prinzipschaltbild des erfindungsgemäßen hydrostatischen Fahrantriebs 1 entsprechend dem in Fig. 1 dargestellten Ausführungsbeispiel.

Der Steuergeber 33 umfaßt im Ausführungsbeispiel zwei Steuerhebel 34a und 34b, die über ein elektrisches Bussystem einerseits mit der Fahrantriebssteuerung 29 als auch andererseits unmittelbar mit verschiedenen hydraulischen Komponenten 50a bis 50g des anzutreibenden Fahrzeugs verbunden sind, die Arbeitsfunktionen am Kran erfüllen, wie Schwenken, Heben sowie Betätigung von Ausleger, Teleskop, Kranfuß und Lenkung. Diese hydraulischen Komponenten 50a bis 50g sind ihrerseits mit der Zulaufleitung 11 des offenen Hydraulikkreislaufes 9 vorzugsweise über Load-Sensing-Ventile verbunden. Die Ansteuerung über das Bussystem ist im Vergleich zu einer hydraulischen Ansteuerung relativ flexibel und einfach im Aufbau.

Die Fahrantriebssteuerung 29 besteht aus der eigentlichen Steuerkomponente 29a und der Fahrzeugelektrik 29b. Die Fahrzeugelektrik 29b verfügt über Ein/Ausgänge 53 und 54, an welchen beispielsweise die Sensoren 35 und 37 angeschlossen sein können. An diesen Ein/Ausgängen 53, 54 können jedoch auch beispielsweise Beleuchtungskomponenten des Fahrzeugs oder andere Bedienkomponenten angeschlossen sein. Die Fahrzeugelektrik 29b verfügt über ein Display 51, über welches die Funktionen des Fahrzeugs durch die Bedienperson überwacht werden können. Sämtliche Komponenten sind über Bussysteme miteinander verbunden. Über die Fahrantriebssteuerung 29 erfolgt beschriebener Weise die Ansteuerung des Fahrantriebs der Vorderachsen 17, 20 und der Hinterachse 36 über die Hydropumpe 4 und den Hydromotor 12 des geschlossenen Hydraulikkreislaufes 6 bzw. das Steuerventil 21 des offenen Hydraulikkreislaufes 9. Ferner wird der Schwenkwinkel der als Arbeitspumpe dienenden zweiten Hydropumpe 5 durch ein entsprechendes elektronisches Steuersignal festgelegt. Auch der Harvester-Kopf 52 wird auf diese Weise angesteuert. Hierzu sind elektronisch ansteuerbare Steuerempfänger 57 - 59 vorgesehen. Der Steuerempfänger 57 dient zur Ansteuerung des Fahrantriebs, der Steuerempfänger 58 dient zur Ansteuerung der Lenkung und der Steuerempfänger 59 dient zur Ansteuerung der zweiten Hydropumpe 5.

Die elektronischen Steuerkomponenten gewährleisten eine hohe Flexibilität. Durch den modularen Aufbau läßt sich das System ohne weiteres für neue Komponenten erweitern.

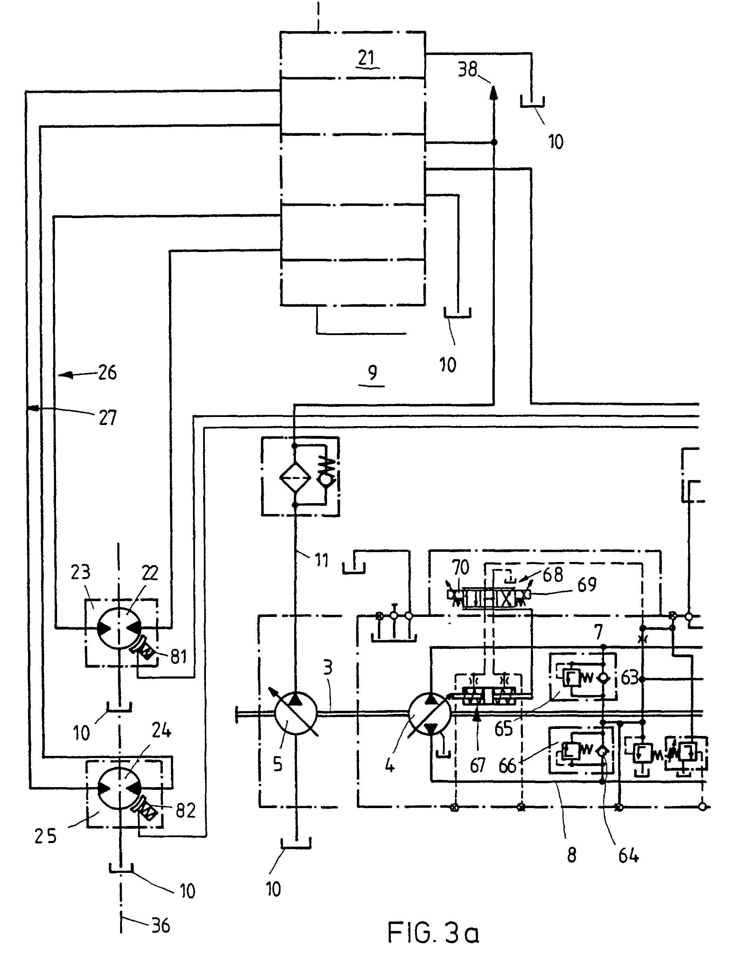

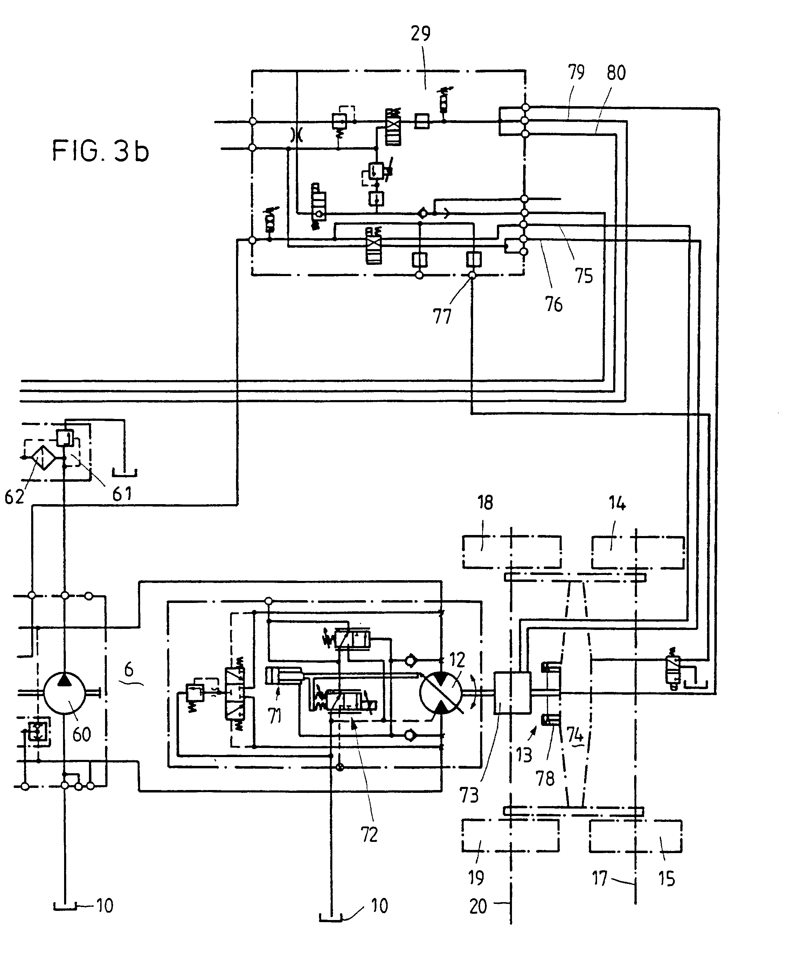

Die Figuren 3A und 3B zeigen ein Ausführungsbeispiel des erfindungsgemäßen Fahrantriebs in einer gegenüber Fig. 1 detaillierteren Darstellung. Zur Erleichterung der Zuordnung sind bereits beschriebene Komponenten mit übereinstimmenden Bezugszeichen versehen.

Ein in den Figuren 3A und 3B nicht dargestellter Verbrennungsmotor treibt die Antriebswelle 3 und somit die erste Hydropumpe 4 und die zweite Hydropumpe 5 an. Die zweite Hydropumpe 5 speist das von dem Hydraulikfluid-Tank 10 angesaugte Hydraulikfluid in die Vorlaufleitung 11 ein. In der Zulaufleitung 11 des offenen Hydraulikkreislaufs 9 befindet sich das Steuerventil 21, das den Volumenstrom individuell über die Hilfskreisläufe 26 und 27 dem zweiten Hydromotor 22 und dem dritten Hydromotor 24 zuführt.

Der geschlossene Hydraulikkreislauf 6 umfaßt die Hydropumpe 4 und den Hydromotor 12, die über die Leitungen 7 und 8 verbunden sind. Auf der Antriebswelle 3 befindet sich eine Hilfspumpe 60, die Hydraulikfluid über ein Druckbegrenzungsventil 61 und ein Filter 62 sowie eines der beiden Rückschlagventile 63 und 64 in die gerade Niederdruck führende Leitung 7 oder 8 einspeist. Zur Druckbegrenzung der gerade Hochdruck führenden Leitung 7 bzw. 8 dienen zwei Druckbegrenzungsventile 65 und 66. Die Verstellvorrichtung 67 der Hydropumpe 4 wird über ein Vorsteuerventil 68 mittels zweier Elektromagneten 69 und 70 elektromagnetisch verstellt. In entsprechender Weise wird die Verstellvorrichtung 71 des ersten Hydromotors 12 über ein elektromagnetisch verstellbares Steuerventil 72 elektrisch angesteuert. Zwischen der ersten Hydropumpe 12 und den Fahrzeugrädern 14, 15, 18 und 19 befindet sich ein zweistufiges Schaltgetriebe 73, um den Wirkungsgrad des Antriebsstrangs über den geschlossenen Hydraulikkreislauf 6 zu erhöhen. Dem mechanischen Schaltgetriebe 73 ist ein Differentialgetriebe 74 nachgeschaltet. Ein Teil der Fahrantriebssteuerung 29 ist im dargestellten Ausführungsbeispiel hydraulisch ausgebildet, wobei zwei Steuerausgänge 75 und 76 der Fahrantriebssteuerung 29 das Schaltgetriebe 73 ansteuern. Ein Steuerausgang 77 der Fahrantriebssteuerung 29 steuert eine Bremseinrichtung 78 der vorderen Fahrzeugachsen 17 und 20 an, während zwei Steuerausgänge 79 bzw. 80 zwei Bremseinrichtungen 81 bzw. 82 des zweiten Hydromotors 22 bzw. des dritten Hydromotors 24 ansteuern. Die Bremseinrichtungen 78, 81 und 82 dienen dem raschen Stillsetzen des Fahrantriebs beim Abbremsen des Fahrzeugs.

Die Erfindung vereint die Vorteile eines Antriebs mit geschlossenem Hydraulikkreislauf 6 mit den Vorteilen eines Antriebs mit offenem Hydraulikkreislauf 9. Die Fahrantriebssteuerung 29 kann neben der Kurvensteuerung auch die Funktion der Niveauregulierung der Antriebsräder übernehmen. Die Hydropumpe 4 und 5 sind vorzugsweise so dimensioniert, daß sie einen ausreichenden Förderstrom bereits bei niedriger Drehzahl zur Verfügung stellen, um eine unnötige Geräuschentwicklung zu vermeiden. Die Funktionen des hydrostatischen Fahrantriebs und die Funktionen der zusätzlichen hydraulischen Komponenten 38 bzw. 50a bis 50g können mit vorgegebenen Prioritäten versehen werden, so daß beim Erreichen des maximalen Fördervolumens der Hydropumpe 5 nur bestimmte bevorzugte Funktionen, beispielsweise der Fahrantrieb und die Kurvensteuerung, aufrecht erhalten werden.

## Patentansprüche

1. Hydrostatischer Fahrantrieb (1) mit einer ersten Hydropumpe (4) und einem mit der ersten Hydropumpe (4) in einem geschlossenen Hydraulikkreislauf (6) über eine Vorlaufleitung (7) und eine Rücklaufleitung (8) verbundenen ersten Hydromotor (12), der zumindest ein erstes Fahrzeugrad (14, 15, 18, 19) antreibt, mit einer zweiten Hydropumpe (5) und einem mit der zweiten Hydropumpe (5) in einem offenen Hydraulikkreislauf (9) über eine Zulaufleitung (11) verbundenen zweiten Hydromotor (22), der zumindest ein zweites Fahrzeugrad (23) antreibt, wobei die Rückführung des Hydraulikfluids von dem zweiten Hydromotor (22) zu der zweiten Hydropumpe (5) über einen Hydraulikfluid-Tank (10) erfolgt,
wobei in der Zulaufleitung (11) des offenen Hydraulikkreislaufs (9) ein Steuerventil (21) angeordnet ist, das dem zweiten Hydromotor (22) einen variablen Volumenstrom zuführt, der von einem das Steuerventil (21) ansteuernden Steuersignal abhängig ist,
wobei der erste Hydromotor (12) die Fahrzeugräder (14, 15) zumindest einer ersten Fahrzeugachse (17) antreibt und an dem Steuerventil (21) neben dem zweiten Hydromotor (22) ein dritter Hydromotor (24) angeschlossen ist, und
wobei der zweite Hydromotor (22) und der dritte Hydromotor (24) gegenüberliegende Fahrzeugräder (23, 25) einer zweiten Fahrzeugachse (36) antreiben,
**dadurch gekennzeichnet,**
**daß** das Steuerventil (21) so ausgebildet ist, daß es in Abhängigkeit von dem Steuersignal dem zweiten Hydromotor (22) und dem dritten Hydromotor (24) separate, variable Volumenströme zuführt.

2. Hydrostatischer Fahrantrieb nach Anspruch 1,
**dadurch gekennzeichnet,**
**daß** der zweite und der dritte Hydromotor (22, 24) über das Steuerventil (21) mit dem Hydraulikfluid-Tank (10) verbunden sind.

3. Hydrostatischer Fahrantrieb nach Anspruch 1 oder 2,
**dadurch gekennzeichnet,**
**daß** mit dem Steuerventil (21) eine Fahrantriebssteuerung (29) verbunden ist, die in Abhängigkeit von einem erfaßten Istknickwinkel (α) zwischen der ersten Fahrzeugachse (17) und der zweiten Fahrzeugachse (36) und/oder einer erfaßten Istdrehzahl (n) zumindest einer der Fahrzeugachsen (17, 36) das Steuerventil (21) so ansteuert, daß dieses dem zweiten und dritten Hydromotor (22, 24) solche separate Volumenströme zuführt, daß sich die Fahrzeugräder (23, 25) der zweiten Fahrzeugachse (36) schlupffrei drehen.

4. Hydrostatischer Fahrantrieb nach Anspruch 3,
**dadurch gekennzeichnet,**
**daß** die Fahrantriebssteuerung (29) in Abhängigkeit von einem mittels eines Steuergebers (33) vorgebbaren Sollknickwinkel (α') zwischen der ersten Fahrzeugachse (17) und der zweiten Fahrzeugachse (36) und/oder einer vorgebbaren Solldrehzahl (n') das Steuerventil (21) so ansteuert, daß dieses dem zweiten und dritten Hydromotor (22, 24) solche separate Volumenströme zuführt, daß sich der Istknickwinkel (α) an den Sollknickwinkel (α') und/oder die Istdrehzahl (n) an die Solldrehzahl (n') annähert.

5. Hydrostatischer Fahrantrieb nach Anspruch 3 oder 4,
**dadurch gekennzeichnet,**
**daß** die Fahrantriebssteuerung (29) das Steuerventil (21) und/oder Verstellvorrichtungen (67) der Hydropumpen (4, 5) und/oder eine Verstellvorichtung (71) des ersten Hydromotors (12) elektrisch ansteuert.

6. Hydrostatischer Fahrantrieb nach einem der vorherigen Ansprüche,
**dadurch gekennzeichnet,**
**daß** oberhalb einer Grenzgeschwindigkeit eines mittels des hydrostatischen Fahrantriebs (1) angetriebenen Fahrzeugs das Steuerventil (21) die daran angeschlossenen Hydromotoren (22, 24) in einen Freilaufbetrieb umschaltet und der Antrieb dann ausschließlich über den geschlossenen Hydraulikkreislauf (6) erfolgt.

7. Hydrostatischer Fahrantrieb nach einem der vorherigen Ansprüche,
**dadurch gekennzeichnet,**
**daß** von dem offenen Hydraulikkreislauf (9) weitere hydraulische Komponenten (38, 50a-50g), insbesondere die hydraulischen Komponenten eines Krans, angetrieben werden.

8. Hydrostatischer Fahrantrieb nach einem der vorherigen Ansprüche,
**dadurch gekennzeichnet,**
**daß** die erste Hydropumpe (4) und die zweite Hydropumpe (5) von einem gemeinsamen Verbrennungsmotor (2) angetrieben werden.

## Claims

1. Hydrostatic drive (1) with a first hydraulic pump (4) and with a first hydraulic motor (12) which is connected to the first hydraulic pump (4) in a closed hydraulic circuit (6) via a forward-flow line (7) and a return-flow line (8) and drives at least one first vehicle wheel (14, 15, 18, 19), with a second hydraulic pump (5) and with a second hydraulic motor (22) which is connected to the second hydraulic pump (5) in an open hydraulic circuit (9) via a supply line (11) and drives at least one second vehicle wheel (23), the return of the hydraulic fluid from the second hydraulic motor (22) to the second hydraulic pump (5) taking place via a hydraulic fluid tank (10), a control valve (21), which supplies the second hydraulic motor (22) with a variable volumetric flow dependent on a control signal controlling the control valve (21), being arranged in the supply line (11) of the open hydraulic circuit (9), the first hydraulic motor (12) driving the vehicle wheels (14, 15) of at least one first vehicle axle (17), and besides the second hydraulic motor (22) a third hydraulic motor (24) being connected to the control valve (21), and the second hydraulic motor (22) and the third hydraulic motor (24) driving opposite vehicle wheels (23, 25) of a second vehicle axle (36), **characterised in that** the control valve (21) is designed in such a way that it supplies the second hydraulic motor (22) and the third hydraulic motor (24) with separate, variable volumetric flows in dependence on the control signal.

2. Hydrostatic drive according to Claim 1, **characterised in that** the second and the third hydraulic motor (22, 24) are connected to the hydraulic fluid tank (10) via the control valve (21).

3. Hydrostatic drive according to Claim 1 or 2, **characterised in that** there is connected to the control valve (21) a drive controller (29) which, in dependence on a detected actual kink angle (α) between the first vehicle axle (17) and the second vehicle axle (36) and/or a detected actual rotational speed (n) of at least one of the vehicle axles (17, 36), controls the control valve (21) in such a way that the latter supplies the second and third hydraulic motor (22, 24) with such separate volumetric flows that the vehicle wheels (23, 25) of the second vehicle axle (36) rotate in a slip-free manner.

4. Hydrostatic drive according to Claim 3, **characterised in that**, in dependence on a desired kink angle (α'), which can be preset by means of a control transmitter (33), between the first vehicle axle (17) and the second vehicle axle (36) and/or a desired rotational speed (n') which can be preset, the drive controller (29) controls the control valve (21) in such a way that the latter supplies the second and third hydraulic motor (22, 24) with such separate volumetric flows that the actual kink angle (α) approaches the desired kink angle (α') and/or the actual rotational speed (n) approaches the desired rotational speed (n').

5. Hydrostatic drive according to Claim 3 or 4, **characterised in that** the drive controller (29) electrically controls the control valve (21) and/or adjusting devices (67) of the hydraulic pumps (4, 5) and/or an adjusting device (71) of the first hydraulic motor (12).

6. Hydrostatic drive according to one of the preceding claims, **characterised in that**, above a limit speed of a vehicle driven by means of the hydrostatic drive (1), the control valve (21) switches the hydraulic motors (22, 24) connected thereto into freewheel operation and the drive then takes place exclusively via the closed hydraulic circuit (6).

7. Hydrostatic drive according to one of the preceding claims, **characterised in that** further hydraulic components (38, 50a-50g), in particular the hydraulic components of a crane, are driven by the open hydraulic circuit (9).

8. Hydrostatic drive according to one of the preceding claims, **characterised in that** the first hydraulic pump (4) and the second hydraulic pump (5) are driven by a common internal combustion engine (2).

## Revendications

1. Dispositif d'entraînement hydrostatique (1) comportant une première pompe hydraulique (4) et un premier moteur hydraulique (12), qui est reliée à la première pompe hydraulique (4) selon un circuit hydraulique fermé (6) par l'intermédiaire d'une canalisation aller (7) et d'une canalisation de retour (8) et qui entraîne au moins une première roue (14, 15, 18, 19) d'un véhicule,
une seconde pompe hydraulique (5) et un second moteur hydraulique (22) relié à la seconde pompe hydraulique (5) dans un circuit hydraulique ouvert (9) par l'intermédiaire d'une canalisation d'arrivée (11), et qui entraîne au moins une seconde roue (23) du véhicule, le renvoi du fluide hydraulique du second moteur hydraulique (22) à la seconde pompe hydraulique (5) s'effectuant au moyen d'un réservoir de fluide hydraulique (10),
dans lequel dans la canalisation d'amenée (11) du circuit hydraulique ouvert (9) est disposée une soupape de commande (21), qui envoie au second moteur hydraulique (22) un flux volumique variable, qui dépend d'un signal de commande qui commande la soupape de commande (21),
dans lequel le premier moteur hydraulique (12) entraîne les roues (14, 15) d'au moins un premier essieu (17) du véhicule et est raccordé à la soupape de commande (21) et le troisième moteur hydraulique (24) est raccordé à la soupape de commande (21) en dehors du second moteur hydraulique (22), et
dans lequel le second moteur hydraulique (22) et le troisième moteur hydraulique (24) entraînent des roues opposées (23, 25) d'un second essieu (36) du véhicule,
**caractérisé en ce**
**que** la soupape de commande (21) est agencée de telle sorte qu'en fonction du signal de commande, elle envoie des flux volumiques séparés variables au second moteur hydraulique (22) et au troisième moteur hydraulique (24).

2. Dispositif d'entraînement hydrostatique selon la revendication 1, **caractérisé en ce que** les second et troisième moteurs hydrauliques (22, 24) sont reliés au moyen de la soupape de commande (21) au réservoir de fluide hydraulique (10).

3. Dispositif d'entraînement hydrostatique selon la revendication 1 ou 2, **caractérisé en ce**
**qu'**à la soupape de commande (16) est reliée une unité (29) de commande d'entraînement, qui, en fonction d'un angle de coude réel détecté (α) entre le premier essieu (17) et le second essieu (36) du véhicule et/ou en fonction d'une vitesse de rotation réelle détectée (n) d'au moins l'un des essieux (17, 36) du véhicule, la soupape de commande (21) est commandée de manière à envoyer aux premier et second moteurs hydrauliques (22, 24) des flux volumiques séparés tels que les roues (23, 25) du second essieu (36) du véhicule tournent sans glissement.

4. Dispositif d'entraînement hydrostatique selon la revendication 3, **caractérisé en ce**
**que** l'unité (29) de commande d'entraînement commande la soupape de commande (21) en fonction d'un angle de coude de consigne (α') pouvant être prédéterminé au moyen d'un transmetteur de commande (33) entre le premier essieu (17) et le second essieu (36) du véhicule et/ou une vitesse de rotation de consigne pouvant être prédéterminée (n') de telle sorte que cette soupape envoie aux second et troisième moteurs hydrauliques (22, 24) des flux volumiques séparés tels que l'angle de coude réel (α) se rapproche de l'angle de coude de consigne (α') et/ou que la vitesse de rotation réelle (n) se rapproche de la vitesse de rotation de consigne (n').

5. Dispositif d'entraînement hydrostatique selon la revendication 3 ou 4, **caractérisé en ce que** l'unité (29) de commande d'entraînement commande électriquement la soupape de commande (21) et/ou les dispositifs de réglage (67) des pompes hydrauliques (4, 5) et/ou un dispositif de réglage (71) du premier moteur hydraulique (12).

6. Dispositif d'entraînement hydrostatique selon l'une des revendications précédentes, **caractérisé en ce qu'**au-dessus d'une vitesse limite d'un véhicule entraîné au moyen du dispositif d'entraînement hydrostatique (1), la soupape de commande (21) commute les moteurs hydrauliques (22, 24), qui y sont raccordés, dans un fonctionnement de roue libre et l'entraînement s'effectue alors exclusivement par l'intermédiaire du circuit hydraulique fermé (6).

7. Dispositif d'entraînement hydrostatique selon l'une des revendications précédentes, **caractérisé en ce que** d'autres composants hydrauliques (38, 50a-50g), notamment les composants hydrauliques d'une grue, sont entraînés par le circuit hydraulique ouvert (9).

8. Dispositif d'entraînement hydrostatique selon l'une des revendications précédentes, **caractérisé en ce que** la première pompe hydraulique (4) et la seconde pompe hydraulique (5) sont entraînées par un moteur à combustion interne commun (2).
